# EUROPÄISCHE PATENTSCHRIFT

(11) **EP 1 364 112 B1**
(45) Veröffentlichungstag und Bekanntmachung des Hinweises auf die Patenterteilung: **03.05.2006**
(21) Anmeldenummer: 02706664.6
(22) Anmeldetag: 04.02.2002
(51) Int. Cl.: F02D 41/40

(54) **VERFAHREN, COMPUTERPROGRAMM UND STEUER- UND/ODER REGELGERÄT ZUM BETREIBEN EINER BRENNKRAFTMASCHINE SOWIE BRENNKRAFTMASCHINE**
METHOD, COMPUTER PROGRAM AND CONTROL AND/OR REGULATING APPLIANCE FOR OPERATING AN INTERNAL COMBUSTION ENGINE, AND CORRESPONDING INTERNAL COMBUSTION ENGINE
PROCEDE, PROGRAMME INFORMATIQUE ET APPAREIL DE COMMANDE OU DE REGULATION POUR L'EXPLOITATION D'UN MOTEUR A COMBUSTION INTERNE, AINSI QUE MOTEUR A COMBUSTION INTERNE

(30) Priorität: 08.02.2001 DE 10105755
(43) Veröffentlichungstag der Anmeldung: 26.11.2003
(73) Patentinhaber: ROBERT BOSCH GMBH, 70442 Stuttgart (DE)
(72) Erfinder: HERDEN, Werner, 70839 Gerlingen (DE)
(86) Internationale Anmeldenummer: PCT/DE2002/000394
(87) Internationale Veröffentlichungsnummer: WO 2002/063155

(56) Entgegenhaltungen:
- EP-A- 0 786 592
- EP-A- 0 849 459
- DE-A- 19 639 172
- US-A- 5 280 773

## Beschreibung

### Stand der Technik

Die vorliegende Erfindung betrifft ein Verfahren zum Betreiben einer Brennkraftmaschine, insbesondere eines Kraftfahrzeugs, bei dem Benzin mittels eines Einspritzventils mit mindestens einer Einspritzung pro Arbeitszyklus während einer Ansaugphase direkt in einen Brennraum der Brennkraftmaschine eingespritzt wird.

Ein solches Verfahren ist vom Markt her bekannt. Es wird auch als Benzin-Direkteinspritzung (BDE) bezeichnet. Bei diesem Verfahren wird der Kraftstoff mit sehr hohem Druck über direkt am Brennraum angeordnete Einspritzventile in den Brennraum der Brennkraftmaschine eingespritzt. Die Brennkraftmaschine arbeitet dabei zyklisch: Bei einer Viertakt-Brennkraftmaschine umfasst ein Arbeitszyklus beispielsweise vier Arbeitstakte.

Bei dem bekannten Verfahren wurde jedoch festgestellt, dass der gesamte eingespritzte Kraftstoff nicht immer optimal verbrennt. Dies führt in manchen Betriebszuständen der Brennkraftmaschine zu einem noch nicht optimal ökonomischen Kraftstoffeinsatz. Darüber hinaus führt eine unvollständige Verbrennung des eingespritzten Kraftstoffs zu HC-Emissionen oder Rußemissionen. Es wurde festgestellt, dass dieses Problem verstärkt im kalten Zustand der Brennkraftmaschine auftritt.

Aus der US 5,280,773 ist eine Diesel-Brennkraftmaschine bekannt, bei der ein sehr schnell öffnendes und schließendes Einspritzventil eingesetzt wird. Auf diese Weise kann eine Einspritzung mit einer bestimmten Impulsfrequenz realisiert werden.

Die vorliegende Erfindung hat daher die Aufgabe, ein Verfahren der eingangs genannten Art so weiterzubilden, dass der Kraftstoffeinsatz noch weiter optimiert wird und gleichzeitig die Emissionen reduziert werden.

Diese Aufgabe wird bei einem Verfahren der eingangs genannten Art dadurch gelöst, dass eine Kraftstoffeinspritzung während einer Ansaugphase eine Mehrzahl von zeitlich voneinander beabstandeten kurzen Einspritzimpulsen umfasst, wobei mindestens ein Impuls so kurz ist, dass das durch ihn in den Brennraum eingespritzte Benzin nicht auf die dem Einspritzventil gegenüber liegende Wand prallt.

### Vorteile der Erfindung

Dem erfindungsgemäßen Verfahren liegt zunächst folgender Gedanke zugrunde: Um eine Homogenisierung, d.h. möglichst gleichmäßige Vermischung des eingespritzten Kraftstoffs mit der Luft im Brennraum zu erreichen, wird der Kraftstoff sehr früh, u.U. schon zu Beginn der Abwärtsbewegung des Kolbens in der Ansaugphase eingespritzt. In dieser Phase ist der Druck im Brennraum relativ niedrig und beträgt typischerweise weniger als 1 bar. Es wurde nun festgestellt, dass bei längeren Öffnungszeiten des Einspritzventils bei einem solch niedrigen Druck im Brennraum der Kraftstoff vom Einspritzventil auf die dem Einspritzventil gegenüberliegende Wand des Brennraums prallt und an dieser Wand als Auftrag haften bleibt. Ein solcher aus Kraftstoff bestehender Wandauftrag an der Wand des Brennraums ist jedoch nur schwer verdampfbar und führt daher zu einem nicht optimalen Gemisch im Brennraum.

Die Dauer eines einzelnen kurzen Einspritzimpulses der Mehrzahl von Einspritzimpulsen einer einzelnen Kraftstoffeinspritzung ist deutlich kürzer als die Gesamtdauer der einzelnen Kraftstoffeinspritzung. Unter einem kurzen Einspritzimpuls wird erfindungsgemäß also eine Einspritzung verstanden, bei der nur ein kleiner Teil der bei der Einzeleinspritzung in den Brennraum der Brennkraftmaschine einzubringenden Kraftstoffmenge tatsächlich eingespritzt wird. Ein derartiger Einspritzimpuls unterscheidet sich also von den Einzeleinspritzungen heute bekannter Doppel- oder Dreifacheinspritzungen.

Hierdurch sinkt die entsprechende Eindringtiefe des Kraftstoffes bei einem solchen Einspritzimpuls. Auf diese Weise wird verhindert, dass der bei einem Einspritzimpuls in den Brennraum eingespritzte Kraftstoff auf die dem Einspritzventil gegenüberliegende Wand prallt und zu dem eingangs genannten Wandauftrag führt. Je kürzer die Dauer eines Einspritzimpulses ist, umso eher ist sichergestellt, dass der solchermaßen eingespritzte Kraftstoff sich mit der im Brennraum befindlichen Luft vermischt und sich nicht an der Brennraumwand niederschlägt. Bei dem erfindungsgemäßen Verfahren findet also keine kontinuierliche Einspritzung statt, sondern eine gepulste Einspritzung, welche auch als "gechopped" bezeichnet wird.

Da bei dem erfindungsgemäßen Verfahren sich der in den Brennraum eingespritzte Kraftstoff im Wesentlichen vollständig mit der im Brennraum befindlichen Luft vermischt, wird der Kraftstoff optimal verbrannt, was den spezifischen Kraftstoffverbrauch senkt und das Emissionsverhalten verbessert. Da der Niederschlag des eingespritzten Kraftstoffes an der Brennraumwand bei kalter Brennraumwand besonders markant ist und dieser Niederschlag bei dem erfindungsgemäßen Verfahren weniger oder überhaupt nicht auftritt, wird das Kaltstartverhalten der Brennkraftmaschine mit dem erfindungsgemäßen Verfahren in besonderer Weise verbessert.

Vorteilhafte Weiterbildungen der Erfindung sind in Unteransprüchen angegeben.

In einer ersten Weiterbildung ist angegeben, dass die bei einer Einspritzung in den Brennraum gelangende Kraftstoffmenge wenigstens auch durch die Dauer der einzelnen Einspritzimpulse eingestellt wird. Zur Steuerung der Leistung der Brennkraftmaschine muss die insgesamt pro Arbeitstakt in den Brennraum eingespritzte Kraftstoffmenge eingestellt werden können. Hierfür bietet die Einstellung der Dauer der einzelnen Einspritzimpulse eine einfache Möglichkeit. Dabei muss allerdings darauf geachtet werden, dass die Dauer eines einzelnen Einspritzimpulses niemals jene Dauer erreicht, bei der die kritische Eindringtiefe überschritten wird. Unter der kritischen Eindringtiefe wird jene Eindringtiefe verstanden, bei der der eingespritzte Kraftstoff auf die dem Einspritzventil gegenüberliegende Wand des Brennraums prallt.

Besonders bevorzugt ist die Einstellung der Leistung der Brennkraftmaschine dadurch, dass die bei einer Einspritzung in den Brennraum gelangende Kraftstoffmenge wenigstens auch durch die Anzahl der einzelnen Einspritzimpulse eingestellt wird.

Am einfachsten ist das erfindungsgemäße Verfahren dadurch zu realisieren, dass die Einspritzimpulse über die Gesamtdauer einer Einspritzung gleichmäßig verteilt sind. Ebenso einfach ist das erfindungsgemäße Verfahren dann, wenn sich die Dauer der Einspritzimpulse über die Gesamtdauer einer Einspritzung nicht verändert. Erfolgt die Einspritzung während der Ansaugphase des Kolbens, trifft jede von einem Einspritzimpuls eingespritzte Teilmenge an Kraftstoff in ein neues angesaugtes Luftvolumen, was zu Vorteilen bei der Verteilung des Kraftstoffs in der Luft im Brennraum führt.

Möglich ist aber auch, dass der zeitliche Abstand zwischen zwei Einspritzimpulsen über die Dauer einer Einspritzung sich verändert. Hierdurch kann der Tatsache Rechnung getragen werden, dass die Kolbengeschwindigkeit während der Ansaugphase nicht konstant ist und insoweit auch die pro Zeiteinheit angesaugten Luftvolumina nicht die gleiche Größe haben. Dies bedeutet wiederum, dass die Kraftstoffverteilung in der Luft im Brennraum optimiert werden kann.

Besonders bevorzugt ist es, wenn die Dauer eines Einspritzimpulses über die Gesamtdauer einer Einspritzung sich verändert, vorzugsweise zunimmt. Diese Variante des erfindungsgemäßen Verfahrens ist dann besonders von Vorteil, wenn die Einspritzung nicht nur während der Ansaugphase sondern auch noch während der Verdichtungsphase der Brennkraftmaschine erfolgt. Da bei der Verdichtungsphase der Brennkraftmaschine der Druck im Brennraum ansteigt, kann auch mit der bei einem längeren Einspritzimpuls vorliegenden größeren Einspritzteilmenge eine Wandbenetzung zuverlässig vermieden werden.

Bei einer besonders bevorzugten Weiterbildung des erfindungsgemäßen Verfahrens ist vorgesehen, dass am Ende einer Einspritzung ein einzelner Einspritzimpuls erfolgt, der länger dauert als die vorhergehenden Einspritzimpulse der Einspritzung. Mit einer solchen Einspritzstrategie kann z.B. in ein homogen mageres Gemisch im Brennraum bei weit angestiegenem Kolben (also gegen Ende der Kompressionsphase der Brennkraftmaschine) noch eine Restmenge eingespritzt werden, die zusammen mit der homogen mageren Füllung, welche zuvor durch eine Mehrzahl von kurzen Einspritzimpulsen eingebracht wurde, innerhalb der entstehenden Gemischwolke im Brennraum etwa Stöchiometrie erzeugt (Schichtung aus stöchiometrischer Gemischwolke und homogen magerer Umgebung). Dieses Verfahren hat den Vorteil, dass extrem magere homogene Grundgemische vollständig verbrannt ("durchgebrannt") werden können, da zuvor ein wesentlicher Teil des Brennraumvolumens stöchiometrisch verbrannt wurde und somit die homogen magere Umgebung aufgeheizt und verdichtet wurde.

Bei einer anderen Weiterbildung ist angegeben, dass pro Einspritzimpuls in etwa 5 mm³ Kraftstoff eingespritzt werden und/oder ein Einspritzimpuls nicht länger als ungefähr 0,5 ms dauert. Mit diesen Werten kann unter normalen Betriebsbedingungen ein Aufprallen des eingespritzten Kraftstoffes auf die dem Einspritzventil gegenüberliegende Wand des Brennraums zuverlässig vermieden werden.

Schließlich ist noch angegeben, dass mehrere Kraftstoffeinspritzungen pro Arbeitszyklus erfolgen, von denen mindestens eine wiederum aus mehreren Einspritzimpulsen besteht. So ist es z.B. möglich, eine Einspritzung in der Ansaugphase und eine andere Einspritzung während der Kompressionsphase der Brennkraftmaschine durchzuführen. Eine solche Vorgehensweise hat Vorteile im Hinblick auf die Klopfempfindlichkeit der Brennkraftmaschine.

Die vorliegende Erfindung betrifft auch ein Computerprogramm, welches zur Durchführung des obigen Verfahrens geeignet ist, wenn es auf einem Computer ausgeführt wird. Dabei ist besonders bevorzugt, wenn das Computerprogramm auf einem Speicher, insbesondere auf einem Flash-Memory, abgespeichert ist.

Weiterhin betrifft die vorliegende Erfindung ein Steuer- und/oder Regelgerät zum Betreiben einer Brennkraftmaschine, insbesondere eines Kraftfahrzeugs, bei der der Kraftstoff direkt in einen Brennraum der Brennkraftmaschine eingespritzt wird. Um den Betrieb der Brennkraftmaschine im Hinblick auf den Kraftstoffverbrauch und das Emissionsverhalten zu optimieren, wird erfindungsgemäß vorgeschlagen, dass das Steuer- und/oder Regelgerät zur Steuerung und/oder Regelung des obigen Verfahrens geeignet ist.

Dabei ist besonders bevorzugt, wenn das Steuer- und/oder Regelgerät mit einem Computerprogramm der oben genannten Art versehen ist.

Die vorliegende Erfindung betrifft ferner noch eine Brennkraftmaschine mit mindestens einem Brennraum und einer Einrichtung, welche den Kraftstoff direkt in den Brennraum einspritzt. Um das Betriebsverhalten dieser Brennkraftmaschine zu verbessern, insbesondere den Kraftstoffverbrauch, das Emissionsverhalten sowie das Kaltstartverhalten, wird erfindungsgemäß vorgeschlagen, dass sie mit einem Steuer- und/oder Regelgerät der oben genannten Art versehen ist.

### Zeichnung

Nachfolgend werden Ausführungsbeispiele der Erfindung unter Bezugnahme auf die beiliegende Zeichnung im Detail erläutert. In der Zeichnung zeigen:
- Fig. 1:: eine Prinzipdarstellung einer Brennkraftmaschine mit Benzin-Direkteinspritzung;
- Fig. 2:: ein Diagramm eines ersten Ausführungsbeispiels eines Verfahrens zum.Betreiben der Brennkraftmaschine von Fig. 1, in dem die eingespritzte Kraftstoffmenge über der Zeit dargestellt ist;
- Fig. 3:: ein Diagramm ähnlich Fig. 2 eines zweiten Ausführungsbeispiels eines Verfahrens zum Betreiben der Brennkraftmaschine von Fig. 1;
- Fig. 4:: ein Diagramm ähnlich Fig. 2 eines dritten Ausführungsbeispiels eines Verfahrens zum Betreiben der Brennkraftmaschine von Fig. 1;
- Fig. 5:: ein Diagramm ähnlich Fig. 2 eines vierten Ausführungsbeispiels eines Verfahrens zum Betreiben der Brennkraftmaschine von Fig. 1;
- Fig. 6:: ein Diagramm ähnlich Fig. 2 eines fünften Ausführungsbeispiels eines Verfahrens zum Betreiben der Brennkraftmaschine von Fig. 1; und
- Fig. 7:: ein Diagramm ähnlich Fig. 2 eines sechsten Ausführungsbeispiels eines Verfahrens zum Betreiben der Brennkraftmaschine von Fig. 1.

### Beschreibung der Ausführungsbeipiele

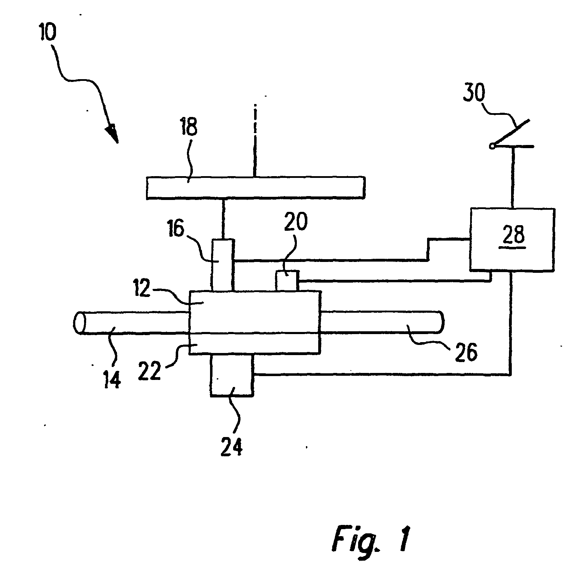

Eine Brennkraftmaschine trägt in Fig. 1 insgesamt das Bezugszeichen 10. Typischerweise wird sie nach dem Viertaktprinzip betrieben, ein Arbeitszyklus umfasst also vier Takte. Eingesetzt wird eine solche Brennkraftmaschine z.B. in Kraftfahrzeugen. Sie umfasst einen Brennraum 12, dem Luft über ein Ansaugrohr 14 zugeführt wird. Kraftstoff wird in den Brennraum 12 durch ein Hochdruck-Einspritzventil 16 eingespritzt. Dieses wird aus einer Kraftstoff-Sammelleitung 18 gespeist, welche auch als "Rail" bezeichnet wird und in der der Kraftstoff unter sehr hohem Druck bereitgestellt wird. Die Zündung des im Brennraum 12 gebildeten Kraftstoff-Luftgemisches erfolgt durch eine Zündeinrichtung 20, vorzugsweise eine Zündkerze. Durch die Expansion des verbrennenden Luft-Kraftstöffgemisches wird ein Kolben 22 bewegt. Der Betriebszustand der Brennkraftmaschine 10, insbesondere die Position des Kolbens 22, wird durch einen Sensor 24 erfasst. Die heißen Verbrennungsabgase werden durch ein Abgasrohr 26 abgeleitet.

Die Brennkraftmaschine 10 umfasst ein Steuer- und Regelgerät 28, dem die Leistungsanforderung eines Benutzers durch ein Gaspedal 30 mitgeteilt wird. Ferner erhält das Steuer- und Regelgerät 28 noch Signale vom Sensor 24. Ausgangsseitig ist es u.a. mit dem Einspritzventil 16 und der Zündanlage 20 verbunden.

Um eine Homogenisierung, d.h. eine möglichst gleichmäßige Vermischung des vom Einspritzventil 16 in den Brennraum 12 eingespritzten Kraftstoffes mit der durch das Ansaugrohr 14 angesaugten Luft zu erreichen, wird der Kraftstoff im Allgemeinen sehr früh, d.h. schon zu Anfang der Abwärtsbewegung des Kolbens 22 in der Ansaugphase der Brennkraftmaschine 10, eingespritzt. Der relevante Winkel der Kurbelwelle (nicht dargestellt) der Brennkraftmaschine 10 wird dabei vom Sensor 24 erfasst und ein entsprechendes Signal an das Steuer- und Regelgerät 28 weitergeleitet.

Da während dieser Phase im Brennraum 12 ein relativ geringer Druck herrscht (im Allgemeinen höchstens ungefähr 1 bar), besteht die Gefahr, dass der vom Einspritzventil 16 unter hohem Druck in den Brennraum 12 eingespritzte Kraftstoff auf die dem Einspritzventil 16 gegenüberliegende Wand (nicht dargestellt) des Brennraums 12 oder die Oberseite des Kolbens 22 prallt und dort anhaftet. Ein solcher Kraftstoffauftrag auf die Wand oder den Kolben 22 ist schwer verdampfbar und nimmt nicht oder zumindest nicht in der gewünschten Weise an der Verbrennung im Brennraum 12 teil, was den Kraftstoffverbrauch erhöht und das Emissionsverhalten verschlechtert. Das Problem des Niederschlags des Kraftstoffs an einer Wand des Brennraums 12 ist dann besonders markant, wenn die Wand des Brennraums 12 kalt ist. In diesem Fall wäre also das Kaltstartverhalten der Brennkraftmaschine 10 beeinträchtigt.

Um zu vermeiden, dass es zu einem solchen Niederschlag des Kraftstoffes an einer Wand des Brennraums 12 kommt, wird das Einspritzventil 16 von dem Steuer- und Regelgerät 28 so angesteuert, dass es impulsartig öffnet und schließt, wobei die Öffnungszeit des Einspritzventils 16 0,5 ms nicht überschreitet. Die während eines Einspritzimpulses, also während einer zusammenhängenden Öffnungszeit des Einspritzventils 16, in den Brennraum 12 gelangende Kraftstoffmenge sollte dabei im Normalfall ungefähr 5 mm³ nicht übersteigen. Bei einer derartigen Impulsdauer und einer derartigen pro Impuls eingespritzten Kraftstoffmenge sinkt die Eindringtiefe des Kraftstoffes im Brennraum 12, so dass der Kraftstoff nicht mehr auf die dem Einspritzventil 16 gegenüberliegende Wand des Brennraums 12 prallt .

Durch die diskontinuierliche, also aus einer Folge einzelner Einspritzimpulse bestehende Einspritzung des Kraftstoffes in den Brennraum 12 wird die Eindringtiefe des Kraftstoffes in den Brennraum 12 reduziert. Die Gefahr, dass der Kraftstoff sich an der dem Einspritzventil 16 gegenüberliegenden Wand des Brennraums niederschlägt, wird wirkungsvoll verringert.

Hierdurch wird sichergestellt, dass der in den Brennraum 12 eingespritzte Kraftstoff möglichst vollständig als Luft-Kraftstoffgemisch im Brennraum 12 vorliegt und somit eine optimale Verbrennung des eingespritzten Kraftstoffes erfolgt. Dies senkt den Kraftstoffverbrauch und verbessert das Emissionsverhalten, insbesondere die HC- oder Rußemissionen. Besonders günstig wirkt sich die verringerte Eindringtiefe des Kraftstoffes in den Brennraum 12 dann aus, wenn die Wand des Brennraums 12 kalt ist, also beim Kaltstart der Brennkraftmaschine 10. Auch in solchen Fällen kann durch das erfindungsgemäße Verfahren sichergestellt werden, dass ein zündfähiges Luft-Kraftstoffgemisch im Brennraum 12 der Brennkraftmaschine 10 vorliegt.

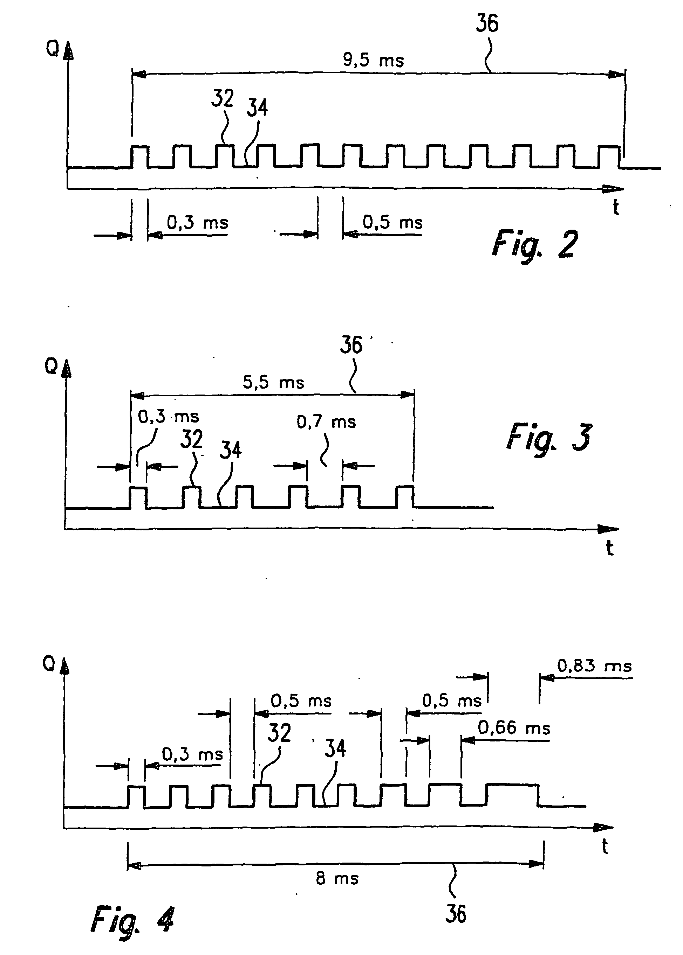

In den in den Fig. 2 bis 7 dargestellten Diagrammen sind verschiedene Ausführungsbeispiele möglicher Impulsfolgen für die Kraftstoffeinspritzung in den Brennraum 12 dargestellt. Die einzelnen Einspritzimpulse tragen das Bezugszeichen 32, wohingegen die Pausen zwischen zwei Einspritzimpulsen das Bezugszeichen 34 tragen. Die gesamte Einspritzung eines Arbeitszyklus der Brennkraftmaschine ist mit 36 gekennzeichnet.

Bei dem in Fig. 2 dargestellten Ausführungsbeispiel einer Impulsfolge sind die zeitlichen Abstände 34 zwischen zwei Impulsen 32 über die Dauer einer Einspritzung gleich lang und betragen ungefähr 0,5 ms. Die Dauer eines Einspritzimpulses 32 selbst beträgt ungefähr 0,3 ms. Die Dauer der gesamten Einspritzung 36 beträgt bei dem in Fig. 2 dargestellten Ausführungsbeispiel ungefähr 9,5 ms. Bei einer Einspritzmenge von 5 mm³ pro Einspritzimpuls 32 wird während der in Fig. 2 dargestellten Einspritzung 36 eine Kraftstoffmenge von insgesamt 60 mm³ eingespritzt. Bei einer Drehzahl von 4000 Umdrehungen/min ist das für die Einspritzung zur Verfügung stehende Zeitfenster ungefähr 11 ms lang. Die bei Volllast einzuspritzende Kraftstoffmenge von 60 mm³ kann also problemlos in den Brennraum 12 der Brennkraftmaschine 10 eingbracht werden.

Das in Fig. 3 dargestellte Ausführungsbeispiel ist für einen Betriebszustand der Brennkraftmaschine 10 gedacht, bei dem diese mit einer Drehzahl von 5000 Umdrehungen/min im Teillastbereich arbeitet. Dies bedeutet, dass bei einer Einspritzung 36 eine Einspritzmenge von ungefähr 30 mm³ eingespritzt werden soll. Das für eine Einspritzung 36 zur Verfügung stehende Zeitfenster ist ungefähr 9 ms lang. Mit den sechs Einspritzimpulsen 32 von 0,3 ms Dauer und Pausen 34 von 0,7 ms Dauer ergibt sich eine Gesamtdauer der Einspritzung von 5,5 ms bei einer der Teillast entsprechenden Einspritzmenge von 30 mm³.

Soll z.B. bei einer höheren Drehzahl und Volllast eine größere Kraftstoffmenge in den Brennraum 12 der Brennkraftmaschine 10 eingespritzt werden, können in einem nicht dargestellten Ausführungsbeispiel die Pausen zwischen den Einspritzimpulsen verkürzt werden. Bei einer Drehzahl der Brennkraftmaschine 10 von beispielsweise 6000 Umdrehungen/min steht ein Zeitfenster für die Einspritzung von ungefähr 7,5 ms zur Verfügung. Um eine Einspritzmenge von 60 mm³ einzuspritzen, genügen zwölf Einspritzimpulse, welche jeweils ungefähr 5 mm³ Kraftstoff einspritzen, und welche jeweils 0,33 ms zeitlich voneinander beabstandet sind. Die sich hieraus ergebende Gesamtdauer der Einspritzung von 7,3 ms liegt deutlich innerhalb des zur Verfügung stehenden Zeitfensters.

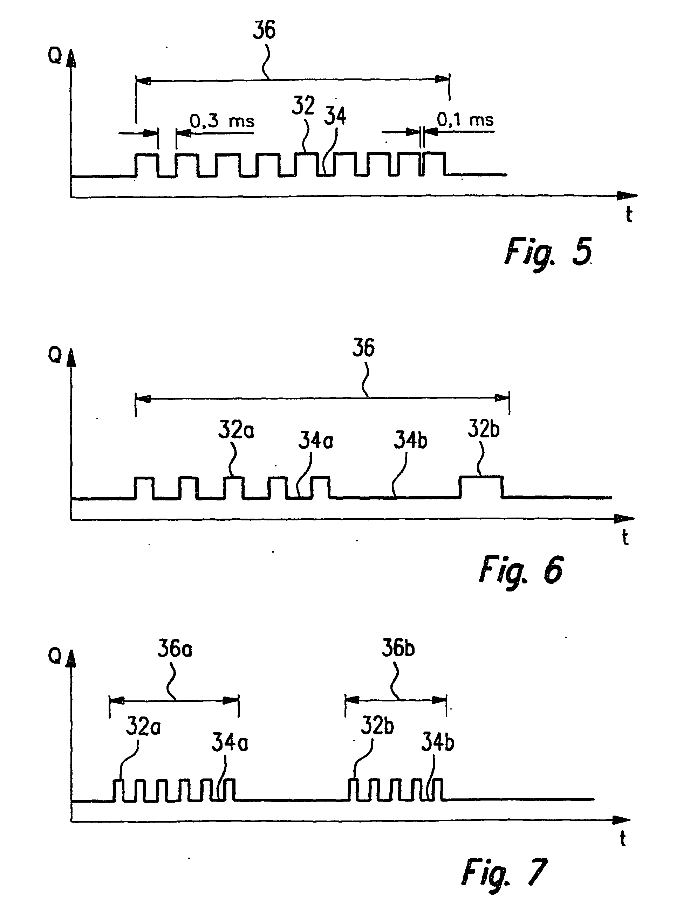

Bei dem in Fig. 4 dargestellten Ausführungsbeispiel einer Inmpulsfolge verlängert sich die Dauer der Einspritzimpulse 32 gegen Ende der Gesamteinspritzung 36. Eine solche Vorgehensweise ist z.B. dann angezeigt, wenn die Einspritzung nicht nur während der Ansaugphase, sondern auch während der Kompressionsphase der Brennkraftmaschine 10 erfolgt. Da während der Kompressionsphase der Druck im Brennraum 12 ansteigt, sinkt bei konstanter Einspritzteilmenge die Eindringtiefe bzw. kann bei gleicher Eindringtiefe eine größere Einspritzteilmenge pro Einspritzimpuls 32 gewählt werden. Bei dem dargestellten Ausführungsbeispiel beträgt die Dauer der Gesamteinspritzung 36 ungefähr 8 ms, wobei die Dauer eines Einspritzimpulses 32 gegen Ende der Einspritzung von 0,3 ms auf 0,5, weiter auf 0,66 und schließlich auf 0,83 ms ansteigt. Möglich ist auch, die Einspritzmenge gegen Ende einer Einspritzung 36 dadurch zu erhöhen, dass die Dauer der Pausen 34 zwischen zwei Einspritzimpulsen 32 verringert wird. Ein solches Ausführungsbeispiel ist in Fig. 5 dargestellt.

Soll eine Schichtung aus einer stöchiometrischen Gemischwolke und einem homogen mageren Gemisch im Brennraum 12 der Brennkraftmaschine 10 erzeugt werden, bietet sich die in Fig. 6 dargestellte Einspritzstrategie an:

Dabei erfolgt nach einer in Serie von Impulsen 32a mit gleichmäßigen Abständen 34a ein einzelner längerer Einspritzimpuls 32b nach einer längeren Pause 34b. Mit der anfänglichen Impulsserie 32a wird im Brennraum 12 ein homogen mageres Gemisch erzeugt. In dieses Gemisch hinein wird, bei weit angestiegenem Kolben 22 während der Kompressionsphase der Brennkraftmaschine 10, über den Einspritzimpuls 32b so viel Kraftstoff eingespritzt, dass eine stöchiometrische Gemischwolke innerhalb des mageren Gemischs entsteht. Diese Betriebsweise hat den Vorteil, dass auch extrem magere homogene Grundgemische vollständig verbrannt werden können, da zuvor ein wesentlicher Teil des Volumens innerhalb des Brennraums 12 stöchiometrisch verbrannt wurde und somit die homogen magere Umgebung aufgeheizt und verdichtet wurde. Der Vorteil der in Fig. 6 dargestellten Einspritzstrategie liegt in dem nochmals verringerten Kraftstoffverbrauch. Eine Einspritzung während der Kompressionsphase der Brennkraftmaschine 10 hat darüber hinaus den Vorteil, dass die Klopfwahrscheinlichkeit der Brennkraftmaschine 10 verringert wird.

In die gleiche Richtung geht das in Fig. 7 dargestellte Ausführungsbeispiel, bei dem innerhalb eines Arbeitszyklus der Brennkraftmaschine 10 zwei Einspritzungen 36a und 36b erfolgen, welche jeweils wiederum aus einzelnen Einspritzimpulsen 32a und 32b mit dazwischen liegenden Pausen 34a und 34b bestehen.

## Patentansprüche

1. Verfahren zum Betreiben einer Brennkraftmaschine (10), insbesondere eines Kraftfahrzeugs, bei dem Benzin mittels eines Einspritzventils (16) mit mindestens einer Einspritzung (36) pro Arbeitszyklus während einer Ansaugphase direkt in einen Brennraum (12) der Brennkraftmaschine (10) eingespritzt wird, **dadurch gekennzeichnet, dass** eine Kraftstoffeinspritzung (36) während einer Ansaugphase eine Mehrzahl von zeitlich voneinander beabstandeten (34) kurzen Einspritzimpulsen (32) umfasst, wobei mindestens ein Impuls so kurz ist, dass das während der Ansaugsphase in den Brennraum (12) eingespritzte Benzin nicht auf die dem Einspritzventil (16) gegenüber liegende Wand prallt.

2. Verfahren nach Anspruch 1, **dadurch gekennzeichnet, dass** die bei einer Einspritzung (36) in den Brennraum (12) gelangende Kraftstoffmenge wenigstens auch durch die Dauer der einzelnen Einspritzimpulse (32) eingestellt wird.

3. Verfahren nach einem der vorhergehenden Ansprüche, **dadurch gekennzeichnet, dass** die bei einer Einspritzung (36) in den Brennraum (12) gelangende Kraftstoffmenge wenigstens auch durch die Anzahl der einzelnen Einspritzimpulse (32) eingestellt wird.

4. Verfahren nach einem der vorhergehenden Ansprüche, **dadurch gekennzeichnet, dass** die Einspritzimpulse (32) über die Gesamtdauer einer Einspritzung (36) gleichmäßig verteilt sind.

5. Verfahren nach einem der vorhergehenden Ansprüche, **dadurch gekennzeichnet, dass** sich die Dauer der Einspritzimpulse (32) über die Gesamtdauer einer Einspritzung (36) nicht verändert.

6. Verfahren nach einem der vorhergehenden Ansprüche, **dadurch gekennzeichnet, dass** der zeitliche Abstand (34) zwischen zwei Einspritzimpulsen (32) über die Dauer einer Einspritzung (36) sich verändert.

7. Verfahren nach einem der vorhergehenden Ansprüche, **dadurch gekennzeichnet, dass** die Dauer eines Einspritzimpulses (32) über die Gesamtdauer einer Einspritzung (36) sich verändert, vorzugsweise zunimmt.

8. Verfahren nach einem der vorhergehenden Ansprüche, **dadurch gekennzeichnet, dass** am Ende einer Einspritzung (36) ein einzelner Einspritzimpuls (32b) erfolgt, der länger dauert als die vorhergehenden Einspritzimpulse (32a) der Einspritzung (36) .

9. Verfahren nach einem der vorhergehenden Ansprüche, **dadurch gekennzeichnet, dass** pro Einspritzimpuls (32) in etwa 5 mm3 Kraftstoff eingespritzt werden und/oder ein Einspritzimpuls (32) nicht länger als ungefähr 0,5 ms dauert.

10. Verfahren nach einem der vorhergehenden Ansprüche, **dadurch gekennzeichnet, dass** mehrere Kraftstoffeinspritzungen (36a, 36b) pro Arbeitszyklus erfolgen, von denen mindestens eine (36a, 36b) wiederum aus mehreren Einspritzimpulsen (32a, 32b) besteht.

11. Computerprogramm, **dadurch gekennzeichnet, dass** es zur Anwendung in einem Verfahren nach einem der vorhergehenden Ansprüche programmiert ist.

12. Elektrisches Speichermedium für eine Steuer- und/oder Regeleinrichtung (28) einer Brennkraftmaschine (10), **dadurch gekennzeichnet, dass** auf ihm ein Computerprogramm zur Anwendung in einem Verfahren der Ansprüche 1 bis 10 abgespeichert ist.

13. Steuer- und/oder Regeleinrichtung (28) für eine Brennkraftmaschine (10), **dadurch gekennzeichnet, dass** sie zur Anwendung in einem Verfahren nach einem der Ansprüche 1 bis 10 programmiert ist.

14. Brennkraftmaschine (10), insbesondere für ein Kraftfahrzeug, mit einer Steuer- und/oder Regeleinrichtung (28), **dadurch gekennzeichnet, dass** die Steuer- und/oder Regeleinrichtung zur Anwendung in einem Verfahren nach einem der Ansprüche 1 bis 10 programmiert ist.

## Revendications

1. Procédé de gestion d'un moteur à combustion interne (10), en particulier d'un véhicule automobile, dans lequel de l'essence est injectée directement dans une chambre de combustion (12) du moteur à combustion interne (10) pendant une phase d'admission, au moyen d'un injecteur (16), avec au moins une injection (36) par cycle de travail,
**caractérisé en ce qu'**
une injection de carburant (36) pendant une phase d'admission comprend une pluralité de brèves impulsions d'injection (32) écartées les unes des autres dans le temps, au moins une impulsion étant suffisamment brève pour que l'essence injectée dans la chambre de combustion (12) pendant la phase d'admission ne rebondisse pas sur la paroi opposée à l'injecteur (16).

2. Procédé selon la revendication 1,
**caractérisé en ce que**
la quantité de carburant parvenant dans la chambre de combustion (12) lors d'une injection (36) est réglée au moins aussi par la durée des impulsions d'injection individuelles (32).

3. Procédé selon l'une des revendications précédentes,
**caractérisé en ce que**
la quantité de carburant parvenant dans la chambre de combustion (12) lors d'une injection (36) est réglée au moins aussi par le nombre d'impulsions d'injection individuelles (32).

4. Procédé selon l'une des revendications précédentes,
**caractérisé en ce que**
les impulsions d'injection (32) sont uniformément réparties sur la durée totale d'une injection (36).

5. Procédé selon l'une des revendications précédentes,
**caractérisé en ce que**
la durée des impulsions d'injection (32) ne varie pas sur la durée totale d'une injection (36).

6. Procédé selon l'une des revendications précédentes,
**caractérisé en ce que**
l'intervalle de temps (34) entre deux impulsions d'injection (32) varie sur la durée d'une injection (36).

7. Procédé selon l'une des revendications précédentes,
**caractérisé en ce que**
la durée d'une impulsion d'injection (32) varie, de préférence augmente, sur la durée totale d'une injection (36).

8. Procédé selon l'une des revendications précédentes,
**caractérisé en ce qu'**
à la fin d'une injection (36) on produit une impulsion d'injection unique (32b) qui dure plus longtemps que les impulsions d'injection précédentes (32a) de l'injection (36).

9. Procédé selon l'une des revendications précédentes,
**caractérisé en ce qu'**
à chaque impulsion d'injection (32), approximativement 5 mm3 de carburant sont injectés et/ou une impulsion d'injection (32) ne dure pas plus qu'environ 0,5 ms.

10. Procédé selon l'une des revendications précédentes,
**caractérisé en ce que**
plusieurs injections de carburant (36a, 36b) se produisent pour chaque cycle de travail, parmi lesquelles au moins l'une (36a, 36b) se compose également de plusieurs impulsions d'injection (32a, 32b).

11. Programme informatique,
**caractérisé en ce qu'**
il est programmé pour appliquer un procédé selon l'une des revendications précédentes.

12. Support de stockage électrique pour un dispositif de commande et/ou de régulation (28) d'un moteur à combustion interne (10),
**caractérisé en ce qu'**
il contient un programme informatique destiné à appliquer un procédé selon les revendications 1 à 10.

13. Dispositif de commande et/ou de régulation (28) pour un moteur à combustion interne (10),
**caractérisé en ce qu'**
il est programmé pour appliquer un procédé selon l'une des revendications 1 à 10.

14. Moteur à combustion interne (10), en particulier pour un véhicule automobile, comprenant un dispositif de commande et/ou de régulation (28),
**caractérisé en ce que**
le dispositif de commande et/ou de régulation est programmé pour appliquer un procédé selon l'une des revendications 1 à 10.

## Claims

1. Method for operating an internal combustion engine (10), in particular of a motor vehicle, in which petrol is injected directly into a combustion chamber (12) of the internal combustion engine (10) by means of an injection valve (16) with at least one injection (36) per working cycle during an intake phase, **characterized in that** a fuel injection (36) during an intake phase comprises a plurality of short injection pulses (32) which are at time intervals from one another, at least one pulse being so short that the petrol which is injected into the combustion chamber (12) during the intake phase does not strike against the wall lying opposite the injection valve (16).

2. Method according to Claim 1, **characterized in that** the quantity of fuel which passes into the combustion chamber (12) during an injection process (36) is also set at least by means of the duration of the individual injection pulses (32).

3. Method according to one of the preceding claims, **characterized in that** the quantity of fuel which passes into the combustion chamber (12) during an injection process (36) is also set at least by means of the number of individual injection pulses (32).

4. Method according to one of the preceding claims, **characterized in that** the injection pulses (32) are distributed uniformly over the entire duration of an injection process (36).

5. Method according to one of the preceding claims, **characterized in that** the duration of the injection pulses (32) does not change over the entire duration of an injection process (36).

6. Method according to one of the preceding claims, **characterized in that** the time interval (34) between two injection pulses (32) changes over the duration of an injection process (36).

7. Method according to one of the preceding claims, **characterized in that** the duration of an injection pulse (32) changes, preferably increases, over the entire duration of an injection process (36).

8. Method according to one of the preceding claims, **characterized in that** an individual injection pulse (32b) which lasts longer than the preceding injection pulses (32a) of the injection process (36) takes place at the end of an injection process (36).

9. Method according to one of the preceding claims, **characterized in that** approximately 5 mm³ fuel is injected per injection pulse (32) and/or an injection pulse (32) does not last for longer than approximately 0.5 ms.

10. Method according to one of the preceding claims, **characterized in that** a plurality of fuel injection processes (36a, 36b) take place per working cycle, at least one injection process (36a, 36b) of which is in turn composed of a plurality of injection pulses (32a, 36b).

11. Computer program, **characterized in that** it is programmed for application in a method according to one of the preceding claims.

12. Electrical storage medium for an open-loop and/or closed-loop control device (28) of an internal combustion engine (10), **characterized in that** a computer program for application in a method of Claims 1 to 10 is stored in said storage medium.

13. Open-loop and/or closed-loop control device (28) for an internal combustion engine (10), **characterized in that** it is programmed for application in a method according to one of Claims 1 to 10.

14. Internal combustion engine (10), in particular for a motor vehicle, having an open-loop and/or closed-loop control device (28), **characterized in that** the open-loop and/or closed-loop control device is programmed for application in a method according to one of Claims 1 to 10.
